# EUROPEAN PATENT APPLICATION

(11) **EP 4 210 198 A1**
(43) Date of publication of application: **12.07.2023**
(21) Application number: 23150582.7
(22) Date of filing: 06.01.2023
(51) Int. Cl.: H02J 7/00, H02J 50/00, H02J 50/10, H02J 50/40, H04B 5/00

(54) **INTEGRATION OF WIRELESS POWER TRANSFER COILS ON A MOUNTING SYSTEM FOR AN ELECTRIC OR ELECTRONIC DEVICE**

(30) Priority: 07.01.2022 BE 202205005
(71) Applicant: Niko NV, 9100 Sint-Niklaas (BE)
(72) Inventor: VANHECK, Serge, 9140 Elversele (BE)
(74) Representative: Winger

(57) **Abstract**

The present invention provides a mounting system (10) for mounting an electric or electronic device (1) in a wall or ceiling or in a piece of furniture. The mounting system (10) comprises a mounting frame (2) adapted for, when being installed, removably fixing the electric or electronic device (1) to a mounting box in a wall or ceiling or in the piece of furniture, and an adapter frame (5) for receiving a central plate (6) of the electric or electronic device (1) and, for, when being installed in an electric or electronic device (1), removably fixing a cover plate (7) to. The mounting system (10) furthermore comprises at least one wireless power transfer coil (9).

## Description

### Technical field of the invention

The present invention relates to the integration of wireless power transfer coils on a mounting system for an electric or electronic device for being mounted in a wall or a ceiling and to an electric or electronic device comprising such a mounting system.

### Background of the invention

Nowadays, more and more user devices have to be charged. However, in a lot of houses or buildings the available number of charging points is limited. It may therefore be a solution to integrate charging devices existing electric or electronic devices, so that existing electric or electronic devices can be switched to charging points.

For example, EP 3 738 183 describes a wall-mounted assembly comprising one or more host devices which receive line voltage and generate low voltage power on one or more contacts for powering one or more modular devices. The one or more modular devices may be installed adjacent to the host device and may share a faceplate with the host device, such as a standard decorator faceplate. The modular devices may receive power from the host device via a power bus between the host device and the one or more modular devices. Further, the power bus may include a communication bus for communication between the host device and the modular devices. The faceplate may be a smart faceplate, which may include circuitry, such as a battery backup, occupancy sensing, a charging dock for a mobile phone, etc. For example, the charging dock may include an inductive coil behind a front surface of the faceplate which inductively couples to a charging antenna inside the mobile phone to wirelessly charge the mobile phone. The inductive coil may couple to the mobile device to wirelessly provide power to the mobile device.

In the assembly of EP 3 738 183 the inductive coil is provided in the faceplate, which makes it difficult in terms of production and logistics, because for every type of faceplate (color, shape, ...) a new version has to be made with the coil integrated in it. This gives a lot of extra costs as well as high amount of extra product references to be provided.

US 2018/0287425 describes a combination outlet and inductive charger. The combination device comprises a wall plate having an outer flange surrounding a receptacle portion, and an inductive charging member extending from the outer flange. The combination device is sized to fit a standard single-gang outlet opening. The receptacle portion is positioned in the center of the outer flange and includes an outlet and a pair of USB outlets. The charging portion extends from the bottom of the outer flange and includes a support connected to the outer flange, a charging pad extending from the front of the support and a charger housing extending from the rear of the support. The charging portion is configured to be moveable. The charging portion comprises at least one retaining member, e.g. a hook and is configured to receive a portable electronic device such as a smart phone. The electronic device can be positioned on the charging pad and the retaining member and angled pad help to secure the electronic device to the charger. The charging portion is configured to provide wireless charging to the electronic device. One or more inductive coils can be positioned inside the charging housing.

Another example is described in US 2017/0025886, where an electrical wiring assembly is disclosed including an electrical wiring device that is configured to be mounted in a device box. A set of electrical terminals are at least partially disposed in the device housing configured for connection to AC distribution wires in the device box. The assembly includes a wall plate assembly, a wall plate housing assembly that is configured to accommodate the electrical wiring device. The wall plate assembly may further include a wall plate for the electrical wiring device that may be integrally formed with an antenna housing. The wall plate may be coupled to the antenna housing back body to enclose an antenna assembly therein. The antenna assembly may further include a circuit assembly that has at least one electromagnetic coil disposed within the antenna housing. The circuit assembly is configured to be coupled to the set of electrical terminals so that the electromagnetic coil propagates a magnetic field via the wall plate portion.

In the devices of and US 2017/0025886, although there is only one device, the charging part of the device is separate from the electrical device part, which makes the devices rather big. WO 2021/150292 describes an electrical device assembly including a wiring device that is configured to be positioned within a wall box installed in a building wall and electrically connected to in-wall electrical wiring and a wall plate. In addition, the wiring device includes circuitry for wireless charging. The wiring device includes a charging circuit. The charging circuit includes one or more induction coils configured to propagate magnetic charging fields to emanate from the wiring device. Wireless charging can be provided by positioning a compatible device with wireless charging capabilities in front of the device.

### Summary of the invention

It is an object of embodiments of the present invention to provide an electric or electronic device for being built into a wall or a ceiling, or in a piece of furniture, such as e.g. a socket, a switch, a USB socket, orientation lightings, and the like

The above objective is accomplished by a device according to embodiments of the present invention.

The present invention provides an electric or electronic device for being built into a wall or ceiling or in a piece of furniture, such as e.g. a kitchen worktop, a cabinet or a table. The electric or electronic device comprises a mounting system comprising a mounting frame adapted for, when being installed to a wall or ceiling, removably fixing the electric or electronic device to a mounting box in the wall or ceiling or in a piece of furniture, and an adapter frame adapted for receiving a central plate of the electric or electronic device. The mounting system furthermore comprises at least one wireless power transfer coil on the mounting frame or on the adapter frame. The electric or electronic device further comprises a cover platen removably fixed to the adapter frame of the mounting system.

An advantage of an electric or electronic device according to embodiments of the invention compared to prior art electric or electronic devices comprising wireless power transfer coils is that for electric or electronic devices according to embodiments of the invention, existing cover plates can be reused and do not need to be replaced by new cover plates. By providing the at least one wireless power transfer coil on the mounting system of the electric or electronic device, a charging function can be easily added to an existing electric or electronic device by simply removing an existing mounting system and replacing it by a mounting system comprising at least one wireless power transfer coil according to embodiments of the invention.

Another advantage of an electric or electronic device according to embodiments of the invention is that on the outside the electric or electronic device looks just like an ordinary electric or electronic device, i.e. no additional parts are provided or required in order to provide a charging function to the electric or electronic device. This is because the at least one wireless power transfer coil is provided on an internal part of the electric or electronic device, i.e. on the mounting frame or on the adapter frame of the mounting system that fixes the electric or electronic device to a mounting box in a wall, ceiling or to a piece of furniture.

This removes the need for having to replace all existing cover plates for electric or electronic devices when replacing existing electric or electronic devices with electric or electronic devices comprising at least one wireless power transfer coil according to embodiments of the invention, which significantly reduces the cost for a user.

Further, also the cost for producing the cover plates is significantly reduces compared to prior art cover plates comprising wireless power transfer coils according to the prior art. Producing cover plates that comprise at least one wireless power transfer coil is much more expensive that producing regular cover plates for electric or electronic devices.

Furthermore, this makes it also more easy to be used with, for example where the electric or electronic device is a switch or socket, multiple switches and sockets which require multiple cover plates. As it is only the mounting system that has to be interchanged by a mounting system comprising at least one wireless power transfer coil according to embodiments of the invention, also here the need to adapt the cover plates is removed.

According to embodiments of the invention, the at least one wireless power transfer coil may be provided on the mounting frame. This may particularly be advantageous when the mounting frame is made out of a plastic material.

However, according to other embodiments of the invention, the at least one wireless power transfer coil may also be provided on the adapter frame. This may particularly be advantageous when the mounting frame is made out of a metal. Providing the coil on a metal part would in that case not work as this would disrupt the wireless power transfer.

According to embodiments of the invention, the adapter frame may removably be connected to the mounting frame by means of e.g. a clicking or snapping mechanism.

According to specific embodiments of the invention, the mounting system may comprise only one wireless power transfer coil and the mounting system may further comprise an electric or electronic function.

An advantage hereof is that a charging function can be added to the existing electric or electronic function, e.g. switch function, socket function, USB charge function or the like, while the existing function can be kept.

According to such embodiments, the electric or electric function may removably be connected to the mounting frame.

According to embodiments of the invention, the mounting system may comprise two or more wireless power transfer coils.

An advantage hereof is that this embodiment gives more flexibility towards power and location of the coils.

According to embodiments of the invention, the electric or electronic device may, for example, be a socket, a switch, a USB socket, orientation lightings, or the like.

According to further embodiments, the electric or electronic device may further comprise a holder for carrying a device to be charged.

The present invention further provides a mounting system for use in an electric or electronic device according to embodiments of the invention. The mounting system comprises a mounting frame adapted for, when being installed, removably fixing the electric or electronic device to a mounting box in a wall or ceiling or in a piece of furniture, an adapter frame adapted for, when being installed in the electric or electronic device, receiving a central plate of the electric or electronic device and for removably fixing a cover plate to, and at least one wireless power transfer coil provided on the mounting frame or on the adapter frame.

### Brief description of the drawings

It has to be noted that same reference signs in the different figures refer to same, similar or analogous elements.
Fig. 1 illustrates an electric or electronic device comprising a mounting system according to embodiments of the invention.
Fig. 2 illustrates an electric or electronic device comprising a mounting system according to embodiments of the invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

Not all embodiments of the invention comprise all features of the invention. In the following description and claims, any of the claimed embodiments can be used in any combination.

The present invention provides a mounting system for an electric or electronic device for being built into a wall or ceiling or in a piece of furniture, such as e.g. a table, a kitchen worktop or a cabinet. The mounting system comprises a mounting frame adapted for, when being installed, removably fixing the electric or electronic device to a mounting box in a wall or ceiling, and an adapter frame for receiving a central plate of the electric or electronic device and for, when being installed in an electric or electronic device, removably fixing a cover plate to. The mounting system furthermore comprises at least one wireless power transfer coil. An advantage of a mounting system according to embodiments of the invention compared to prior art electric or electronic devices comprising wireless power transfer coils is that existing with a mounting system according to embodiments of the invention existing cover plates can be reused and do not need to be replaced. By providing the at least one wireless power transfer coil on the mounting system, a charging function can be easily added to an existing electric or electronic device by simply removing an existing mounting system and replacing it by a mounting system according to embodiments of the invention comprising the at least one wireless power transfer coil.

This removes the need for having to replace all existing cover plates for electric or electronic devices when replacing existing electric or electronic devices with electric or electronic devices comprising at least one wireless power transfer coil, which significantly reduces the cost for a user.

Further, also the cost for producing the cover plates is significantly reduces compared to prior art devices comprising wireless power transfer coils according to the prior art. Producing cover plates that comprise at least one wireless power transfer coil is much more expensive that producing regular cover plates for electric or electronic devices.

Furthermore, this makes it also more easy to be used with, for example where the electric or electronic device is a switch or socket, multiple switches and sockets which require multiple cover plates. As it is only the mounting system that has to be interchanged by a mounting system according to embodiments of the invention, also here the need to adapt the cover plates is removed.

Another advantage of an electric or electronic device according to embodiments of the invention is that on the outside the electric or electronic device looks just like an ordinary electric or electronic device, i.e. no additional parts are provided or required in order to provide a charging function to the electric or electronic device. This is because the at least one wireless power transfer coil is provided on an internal part of the electric or electronic device, i.e. on the mounting frame or on the adapter frame of the mounting system that fixes the electric or electronic device to a mounting box in a wall, ceiling or to a piece of furniture.

The present invention will hereinafter be described by means of different embodiments. It has to be understood that these embodiments are only for the ease of understanding the invention and are not intended to limit the invention in any way.

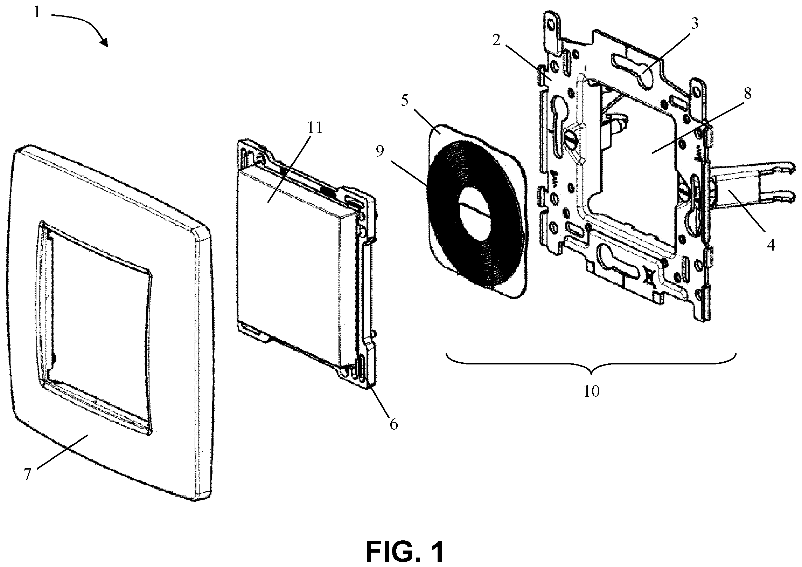

Fig. 1 illustrates an electric or electronic device 1 according to embodiments of the invention. In the example given, the electric or electronic device 1 may be a switch. It has to be understood that this is not intended to limit the invention in any way. Any electric or electronic device that can be mounted in a wall or ceiling or in a piece of furniture such as e.g. a table, a kitchen worktop or a cabinet can benefit from a mounting system according the embodiments of the invention. This may include electric or electronic devices comprising an electric function, such as for example but not limited to, a switch, a socket, a USB connector, an orientation light, or the like.

In the example given, the electric or electronic device 1 may comprise a mounting system 10 for mounting the electric or electronic device 1 in a wall or ceiling. The mounting system 10 comprises a mounting frame 2 adapted for, when the mounting system 10 is being installed in a wall or ceiling, removably fixing the electric or electronic device 1 to a mounting box in the wall or ceiling. Fixing the mounting frame 2 to the mounting box may be done in any suitable way as known by a person skilled in the art, such as for example by means of screws and or claws. Therefore, the mounting frame 2 may comprise suitable screw holes 3 and claws 4. The mounting system 10 further comprises an adapter frame 5 adapted for receiving a central plate 6 of the electric or electronic device 1 and for, when the electric or electronic device 1 is installed in a wall or ceiling, removably fixing a cover plate 7 to. The adapter plate 5 may have a same shape as a central opening in the mounting frame 2, so as to fit in that central opening 8. The adapter frame 5 may be removably fixed at a back side of the central plate 6 by, for example, a snap fit connection.

The mounting system 10 further comprises at least one wireless power transfer coil 9. In the example given, a wireless power transfer coil 9 is provided on the adapter frame 5. According to the present embodiment, the adapter frame 5 may be made out of a plastic material. According to embodiments of the invention, the wireless power transfer coil 9 may be printed onto the adapter frame 5 or may be provided in any other suitable way as known by a person skilled in the art.

The electric or electronic device 1 may further comprise an electric or electronic function 11. According to embodiments of the invention, the electric or electronic function 11 may be removably fixed to the central plate 6 by means of, for example, a snapping mechanism. The central plate 6 together with the adapter plate carrying the wireless power transfer coil may then also be removably fixed to the mounting frame 2.

An advantage hereof is that, when a charging function is to be added to an existing electric or electronic device, the existing mounting frame only needs to be removed by a mounting system 10 according to embodiments of the invention. Because all elements are removably fixed to each other, the existing central plate with the electric or electronic function can easily be removed from the existing mounting frame. The existing mounting frame can then be replaced by a mounting system 10 according to embodiments of the invention and the existing central plate with the electric or electronic function can then be removably fixed to the mounting system 10 according to embodiments of the invention.

Hence, with a mounting system 10 according to embodiments of the invention, a charging function can easily be added to an existing electric or electronic device 1 while keeping the original electric or electronic function. Hence, in this case the existing electric or electronic device can be extended with a charging function.

However, it has to be understood that a mounting system 10 according to embodiments of the invention is not only intended to be used for adding a charging function to an existing electric or electronic device, it can also be present in a new electric or electronic device 1.

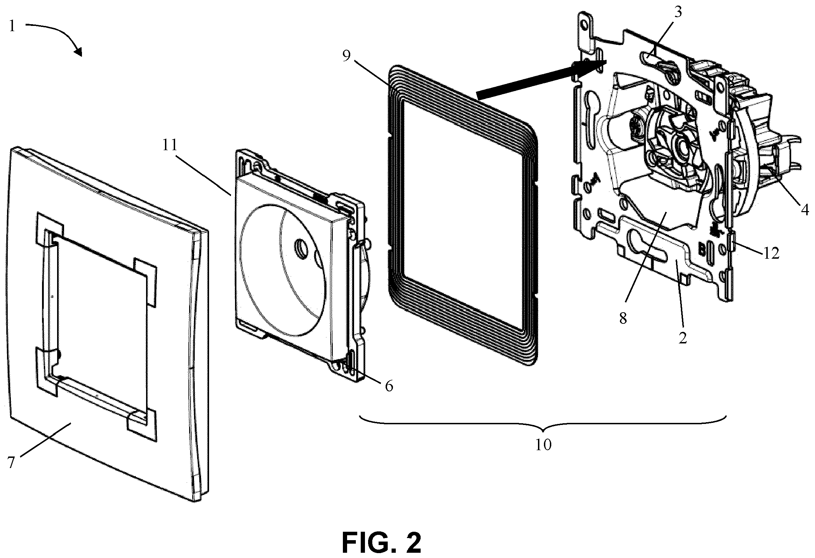

Fig. 2 illustrates another embodiment of an electric or electronic device 1 according to embodiments of the invention. According to that embodiment, the electric or electronic device 1 may be a socket outlet. Again it has to be noticed that this is only for the ease of explanation, the electric or electronic device 1 may be any electric or electronic device that can be mounted in a wall or ceiling or in a piece of furniture such as e.g. a table, a kitchen worktop or a cabinet. This may include electric or electronic devices comprising an electric function, such as for example but not limited to, a switch, a socket, a USB connector, an orientation light, or the like.

The electric or electronic device 1 may comprise a mounting system 10 for mounting the electric or electronic device 1 in a wall or ceiling. The mounting system 10 comprises a mounting frame 2 adapted for, when the mounting system 10 is being installed in a wall or ceiling, removably fixing the electric or electronic device 1 to a mounting box in the wall or ceiling. Fixing the mounting frame 2 to the mounting box may be done in any suitable way as known by a person skilled in the art, such as for example by means of screws and or claws. Therefore, the mounting frame 2 may comprise suitable screw holes 3 and claws 4. The mounting system 10 further comprises an adapter frame 5 adapted for receiving a central plate 6 of the electric or electronic device 1 and for, when the electric or electronic device 1 is installed in a wall or ceiling, removably fixing a cover plate 7 to. In the example given, the adapter frame 5 is not visible in the drawing, as it is already attached to a backside of the central plate 6.

The mounting system 10 further comprises at least one wireless power transfer coil 9. In the example given, a wireless power transfer coil 9 is provided on the mounting frame 2. According to the present embodiment, the mounting frame 2 may be made out of a plastic material. According to embodiments of the invention, the wireless power transfer coil 9 may be printed onto the mounting frame 2 or may be provided in any other suitable way as known by a person skilled in the art. In the example given, the wireless power transfer coil 9 may be provided onto the mounting frame 2 by means of a snapping mechanism, the snapping mechanism 12 being preferably also made out of a plastic material.

The electric or electronic device 1 may further comprise an electric or electronic function 11. According to embodiments of the invention, the electric or electronic function 11 may be a socket outlet and may be removably fixed to the central plate 6 by means of, for example, a snapping mechanism.

When a mounting system 10 according to embodiments of the invention is used to fix an electric or electronic device 1 to a mounting box in a wall or ceiling, a charging function is thus added to the electric or electronic device 1. Hence, any device that can be wirelessly charged, such as e.g. a smart phone, a tablet, ear pods, or the like can, by putting it in the neighborhood of the electric or electronic device 1 comprising the mounting system 10. For example, when the electric or electronic device is mounted in a kitchen worktop, the device to be charged can be just put onto the kitchen worktop in the neighborhood of the electric or electronic device 1, e.g. socket outlet or USB connector, comprising the mounting system 10 according to embodiments of the invention.

According to further embodiments, when the electric or electronic device 1 is mounted in a wall, assistance can be provided for holding the device to be charged. For example, a holder may be integrated in the electric or electronic device 1 for holding the device and for bringing it in close proximity to the at least one coil 9 in the electric or electronic device 1 for optimum charging.

However, a holder does not necessarily be provided.

## Claims

1. An electric or electronic device (1) for being built into a wall or a ceiling or in a piece of furniture, the electric or electronic device (1) comprising:
- a mounting system (10) for mounting the electric or electronic device (1) in the wall or ceiling, or in a piece of furniture, the mounting system (10) comprising:
- a mounting frame (2) adapted for, when being installed, removably fixing the electric or electronic device (1) to a mounting box in a wall or ceiling or in a piece of furniture, and
- an adapter frame (5) adapted for receiving a central plate (6) of the electric or electronic device (1), and
- at least one wireless power transfer coil (9) provided on the mounting frame (2) or on the adapter frame (5),
and
- a cover plate (7) removably fixed to the adapter frame (5) of the mounting system (10).

2. An electric or electronic device (1) according to claim 1, wherein the adapter frame (5) is removably connected to the mounting frame (2).

3. An electric or electronic device (1) according to claim 1 or 2, wherein the electric or electronic device (1) further comprises an electric or electronic function (11) removably fixed to the central plate (6).

4. An electric or electronic device (1) according to claim 1 or 2, wherein the mounting system comprises two or more wireless power transfer coils (9).

5. An electric or electronic device (1) according to any of the previous claims, wherein the electric or electronic device (1) is a socket, a switch, a USB socket, orientation lightings, or the like.

6. An electric or electronic device (1) according to any of the previous claims, further comprising a holder for carrying a device to be charged.

7. A mounting system (10) for use in an electric or electronic device (1) according to any of the previous claims, the mounting system (10) comprising:
- a mounting frame (2) adapted for, when being installed, removably fixing the electric or electronic device (1) to a mounting box in a wall or ceiling or in a piece of furniture,
- an adapter frame (5) adapted for, when being installed in the electric or electronic device (1), receiving a central plate (6) of the electric or electronic device (1) and removably fixing a cover plate (7) to, and
- at least one wireless power transfer coil (9) provided on the mounting frame (2) or on the adapter frame (5).
